# EUROPEAN PATENT SPECIFICATION

(11) **EP 1 095 510 B1**
(45) Date of publication and mention of the grant of the patent: **30.11.2005**
(21) Application number: 99930427.2
(22) Date of filing: 18.06.1999
(51) Int. Cl.: H04N 5/445

(54) **WEB BROWSER SYSTEM FOR DISPLAYING RECENTLY VIEWED TELEVISION CHANNELS**
WEB BROWSER SYSTEM FÜR DIE DARSTELLUNG VON KÜRZLICH BETRACHTETEN FERNSEHKANÄLEN
SYSTEME NAVIGATEUR WEB POUR AFFICHER DES CHAINES DE TELEVISION RECEMMENT REGARDEES

(30) Priority: 29.06.1998 US 107083
(43) Date of publication of application: 02.05.2001
(73) Proprietor: MICROSOFT CORPORATION, Redmond, Washington 98052-6399 (US)
(72) Inventor: WHITE, Christopher, M., San Francisco, CA 94115 (US)
(74) Representative: Wright, Howard Hugh Burnby
(86) International application number: PCT/US1999/013855
(87) International publication number: WO 2000/001142

(56) References cited:
- EP-A- 0 725 539
- EP-A- 0 837 599
- WO-A-96/13120
- WO-A-97/37490
- WO-A-98/00975
- US-A- 5 583 560
- US-A- 5 652 628
- US-A- 5 682 207
- US-A- 5 699 125
- US-A- 5 737 029
- US-A- 5 754 253

## Description

### TECHNICAL FIELD

The present invention relates to web browsers, and more particularly to a method of displaying images of recently viewed television channels.

### BACKGROUND OF THE INVENTION

Traditional means of home access to the Internet and the World Wide Web (Web) involve use of personal computers or dedicated Network Computers (NC's). The Web is a collection of formatted hypertext pages located on numerous computers around the world that are logically connected by the Internet. Recent advances in network technology have enabled access to the Internet and the Web through a standard television set as an alternative to the personal computer. In these systems, the television is basically used as a display device for a network interface set-top box, which provides access to web pages and content available on the Web. The use of web technology in the context of television channel selection is discussed in EP-A-0 837 599.

Network interface systems which combine a television tuner and standard network interface devices allow a user to simultaneously view both broadcast or television programs as well as web programming. Certain systems display the television program content as an image or window within a web page. Although it is possible to change the television controls, such as channel and volume, through familiar methods (e.g., panel knobs or remote control), access to television programs in integrated television/web systems can benefit from improved methods. For example, when scanning or "surfing" the television to select a particular program or channel to watch, a user typically selects or "flips" through several channels sequentially and views each one for a couple of seconds or so before moving on. If there are two or three programs that a user is interested in, the user must flip between channels by entering the channel number or flipping through intermediate channels. This is often a time consuming process that requires the user to remember particular channel numbers or consult a TV program listing or guide.

Based on the foregoing, it is desirable to provide a television receiver system that displays a number of most recently viewed television channels so that a previously viewed channel can easily be re-selected for viewing.

It is further desirable to provide a television receiver system that displays the graphical content of recently viewed television channels so that a user is readily reminded of what was viewed on a particular channel.

It is yet further desirable to provide a television receiver system that displays updated graphical content of recently viewed television channels so that a user knows what is presently being shown on previously accessed channels.

Such a system is disclosed in US-A-5 737 029.

### SUMMARY OF THE INVENTION

The present invention concerns a system, method and computer-readable medium as set out in the claims.

A live television broadcast signal is displayed in the active screen and still images corresponding to the last images viewed on the other recently viewed television channels are displayed in the remaining small screen images. The active screen may be expanded into a full size image displayed on the display device to allow a more comfortable viewing of the active program.

### BRIEF DESCRIPTION OF THE DRAWINGS

Fig 1 illustrates a system having multiple clients connected to a Web server system, which in turn is connected via the Internet to multiple remote servers.
Fig 2 illustrates a client system.
Fig 3 illustrates a remote control unit employed in the client system.
Fig 4 is a block diagram of an electronics unit employed in the client system to implement a Web browser program.
Fig 5 is a block diagram of the software/hardware architecture of the client system.
Fig 6 is a block diagram of the software/hardware components in the electronics unit illustrated of Fig 4.
Fig 7 illustrates a Television Home Page of the Web browser program.
Fig 8 illustrates a Recent display screen of the Web browser program.
Fig 9 is a flowchart illustrating steps in a method for storing and displaying recently viewed television channels.

### DETAILED DESCRIPTION OF THE PREFERRED EMBODIMENT

The present invention includes various steps, which are described below. The steps can be embodied in machine-executable instructions, which can be used to cause a general-purpose or special-purpose processor programmed with the instructions to perform the steps. Alternatively, the steps of the present invention might be performed by specific hardware components that contain hardwired logic for performing the steps, or by any combination of programmed computer components and custom hardware components.

While the invention is described in the context of viewing Web content on an Internet terminal system, such as the WebTV® Internet terminal, the method and apparatus described herein are equally applicable to other types of content that may be stored remotely or content that may be directly accessible to the viewing system (WebTV is a registered trademark of WebTV Networks, Inc. of Palo Alto, California). For example, logical addresses embedded in a video signal may refer to content stored on a CD-ROM or other mass storage device, a company's Intranet server, or other resource. Additionally, certain aspects of the invention described herein have equal application to various other TV viewing devices, such as personal computers equipped with TV tuners, and the like. Moreover, while various implementations are described with reference to an NTSC broadcast video signal, aspects of the present invention are equally applicable to other broadcast TV systems, such as Phase Alternate Lines (PAL), Sequential Couleur Avec Memoire (SECAM), and the proposed High Definition Television (HDTV) standard. Finally, it is appreciated that a variety of other transport mechanisms may be employed, including digital satellite, digital TV, and cable TV.

### System Overview

Aspects of the present invention may be included in an Internet system terminal, such as the WebTV Internet terminal, for providing a user with access to the Internet. As will be discussed further below, the Internet system includes an Internet terminal (also referred to as an Internet System client or "client") and an Internet server ("server"). A user of an Internet terminal generally accesses a server via a direct-dial telephone (POTS, for "plain old telephone service"), ISDN (Integrated Services Digital Network), or other similar connection, in order to browse the Web, send and receive email, and use various other Internet system network services. Services provided by the Internet system network service, such as the WebTV network, are typically provided by servers using software residing within the servers in conjunction with software residing within a client.

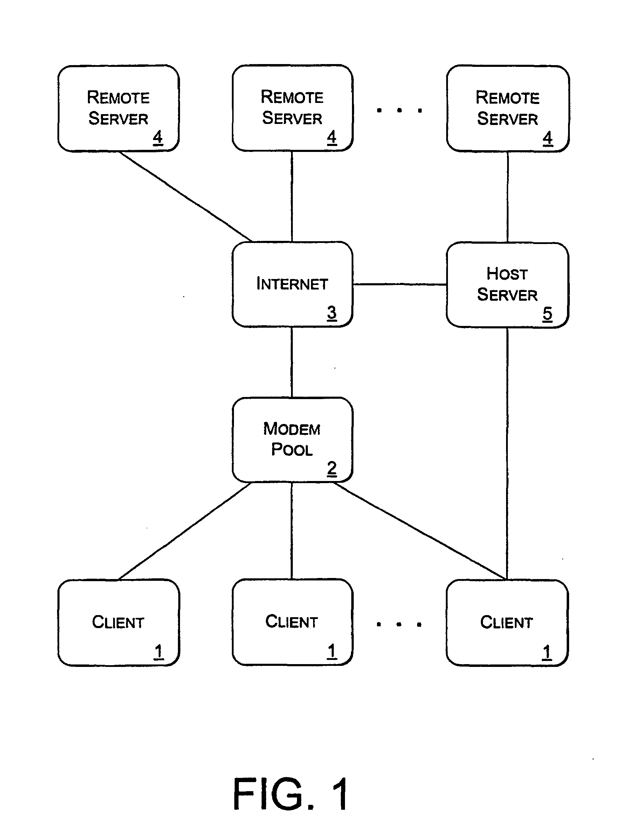

Fig. 1 illustrates a basic configuration of an Internet system network in which one embodiment of the present invention may be implemented. A number of clients 1 are coupled to a modem pool 2 via direct-dial, bi-directional data connections 29, which may be telephone (POTS, i.e., "plain old telephone service"), ISDN (Integrated Services Digital Network), or any other similar type of connection. Other connection mechanisms may be employed such as cable and satellite forward channels, for example. In any event, the modem pool 2 is coupled typically through a router, such as that conventionally known in the art, to a number of remote servers 4 via a conventional network infrastructure 3, such as the Internet. The Internet system also includes a server 5, which specifically supports the clients 1. The clients 1 each have a connection to the server 5 through the modem pool 2 and the Internet 3. Note that the modem pool 2 is a conventional modem pool, such as those found today throughout the world providing access to the Internet and private networks.

### Exemplary Client System

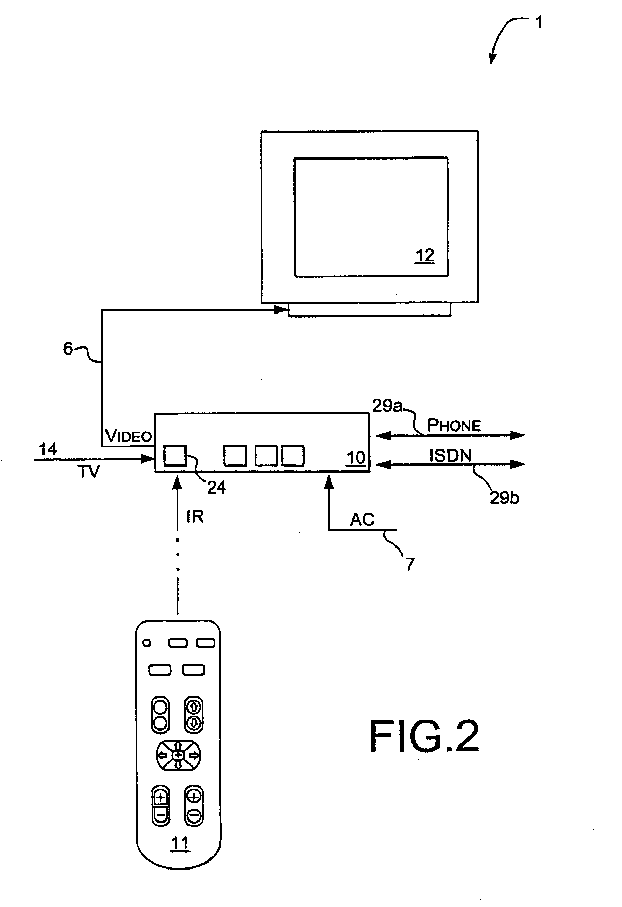

Fig. 2 illustrates an Internet system client ("client") 1 known in the art. The client 1 includes an electronics unit 10 implemented as a set-top box (STB), an ordinary television set 12, and a remote control 11. In the illustrated implementation, the client 1 uses the television set 12 as a display device for displaying video data and a graphical user interface. The set-top box 10 is coupled to the television set 12 by a video link 6. The video link 6 is an RF (radio frequency), S-video, composite video, or other equivalent form of video link. Although the electronics unit is shown separately from the television set, the electronic unit 10 may alternatively be built into the television set 12 as an integral unit.

The set-top box 10 includes hardware and/or software for receiving and decoding a broadcast video signal 8, such as an NTSC, PAL, SECAM or other TV system video signal, and providing video data to the television set via video link 6. The set-top box- 10 also includes hardware and/or software for providing the user with a graphical user interface, by which the user can access various Internet system network services, browse the Web, send email, and otherwise access the Internet. The user interface includes means for notifying the user of the presence of encoded data, such as URLs, embedded in the video signal. The notification may be audible, visual or a combination of the two. In one implementation, the notification comprises temporarily displaying an icon in a portion of the screen.

The client 1 may include both a standard modem and an ISDN modem, such that the communication link 29 between the set-top box 10 and the server 5 can be either a telephone (POTS) connection 29a or an ISDN connection 29b. The set-top box 10 receives power through a power line 7.

The user operates the remote control 11 to control the client 1 in browsing the Web, sending email, and performing other Internet-related functions. The set-top box 10 receives commands from remote control 11 via an infrared (IR) communication link. In alternative embodiments, the link between the remote control 11 and the set-top box 10 may be RF or any equivalent mode of transmission.

### Exemplary Client-System Architecture

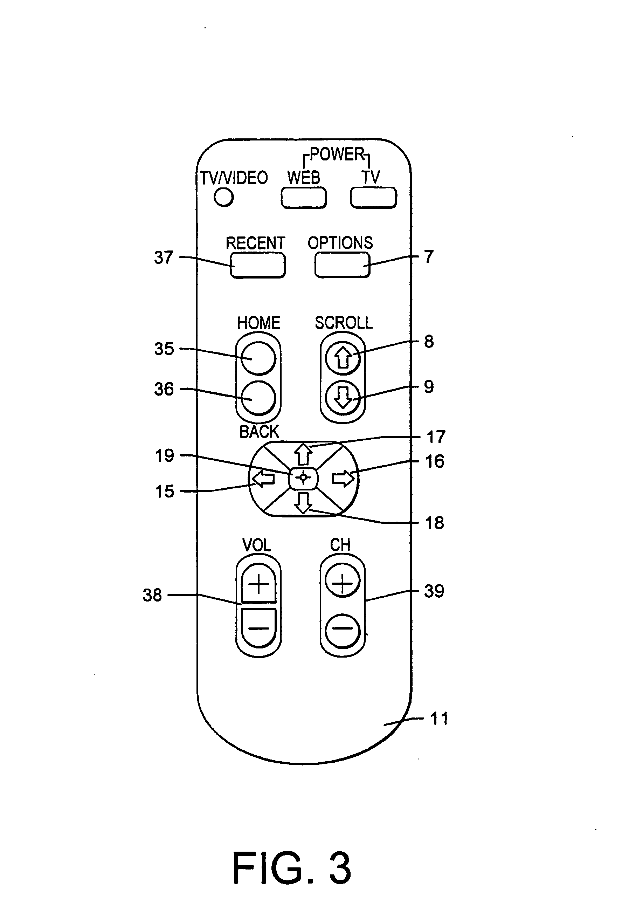

Fig. 3 shows remote control 11 in greater detail. In this illustration, remote control 11 is configured similarly to common hand-held remote units used to control television sets. In other exemplary implementations, remote control 11 may be a wired handheld controller or a wired or wireless (e.g., IR) keyboard or any other similar device. Remote control 11 includes an "Options" button 7, "Scroll up" button 8, "Scroll down" button 9, direction buttons 15-18, enter (or Go) button 19, "Home" button 35, "Back" button 36, and "Recent" button 37. Direction buttons 15-18 include left button 15, right button 16, up button 17, and down button 18.

These buttons allow a user to control movement of a cursor on the display device 12. The enter button 19 causes the STB 10 to execute a highlighted command or access a currently selected hypertext link. Remote control 11 also includes volume control buttons (VOL +/-) 38 to control the volume of audio content from television programs or web pages, and channel control buttons (CH +/-) 39 which allow a user to sequentially select television channels.

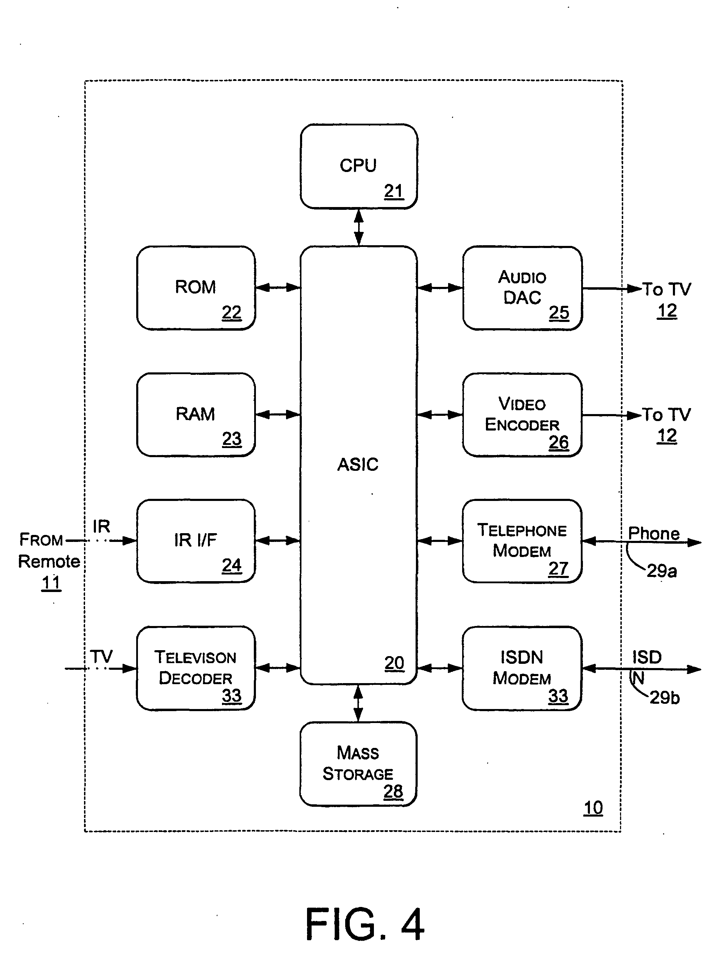

Fig. 4 shows the internal components of the set-top box 10. It has a central processing unit (CPU) 21 coupled to an Application-Specific Integrated Circuit (ASIC) 20. The CPU 21 executes software designed to implement features of the present invention and to control operation of the client 1. ASIC 20 contains circuitry to implement certain features provided by the client 1. ASIC 20 is coupled to an audio digital-to-analog converter (DAC) 25, which provides audio output to television 12. In addition, ASIC 20 is coupled to a video encoder 26, which provides video output to television set 12.

An IR interface 24 detects IR signals transmitted by remote control 11 and in response, provides corresponding electrical signals to ASIC 20. A standard telephone modem 27 and an ISDN modem 30 are coupled to ASIC 20 to provide connections 29a and 29b, respectively, to the modem pool 2 and, via the Internet 3, to the remote servers 4. Note that the set-top box 10 also may include a cable television modem (not shown).

STB 10 also includes a television decoder 33 to decode television signals received from either cable television or antenna sources. The television decoder 33 provides corresponding electrical signals to ASIC 20, thereby allowing video data carried in the broadcast video signal 8 to be presented to the viewer on the TV 12. In an alternative implementation, the STB 10 includes two television decoders to enable simultaneous reception and viewing of more than one television program at one time.

ASIC 20 is also coupled to a Read Only Memory (ROM) 22 and a Random Access Memory (RAM) 23. ROM 22 stores program code for implementing the application software to be executed by the set-top box 10. ROM 22 may be a programmable ROM (PROM) or any form of erasable PROM (EPROM) or Flash memory. A mass storage device 28 may optionally be provided and coupled to ASIC 20. The mass storage device 28 may be used to input software or data to the client or to download software of data received over network connection 29. The mass storage device 28 includes any suitable medium for storing machine-executable instructions, such as magnetic disks, optical disks, and the like.

### Application Software

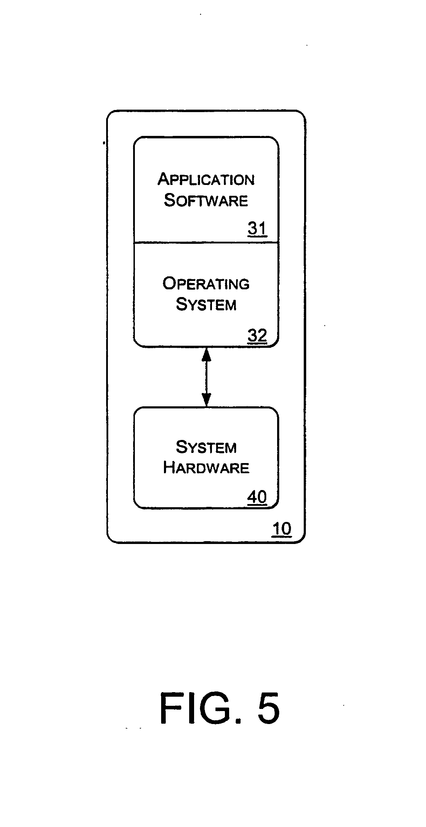

The STB 10 includes application software including a Web browser. As shown in Fig. 5, the application software 31 operates in conjunction with operating system (OS) software 32. The OS software 32 includes various device drivers and otherwise provides an interface between the application software 31 and the system hardware components 40 (i.e., the elements illustrated in Fig. 4).

In one implementation, the application software 31 and OS software 32 are stored in ROM 22. It will be recognized, however, that either or both of application software 31 and OS software 32 can be stored on any suitable storage medium, including magnetic or optical storage devices.

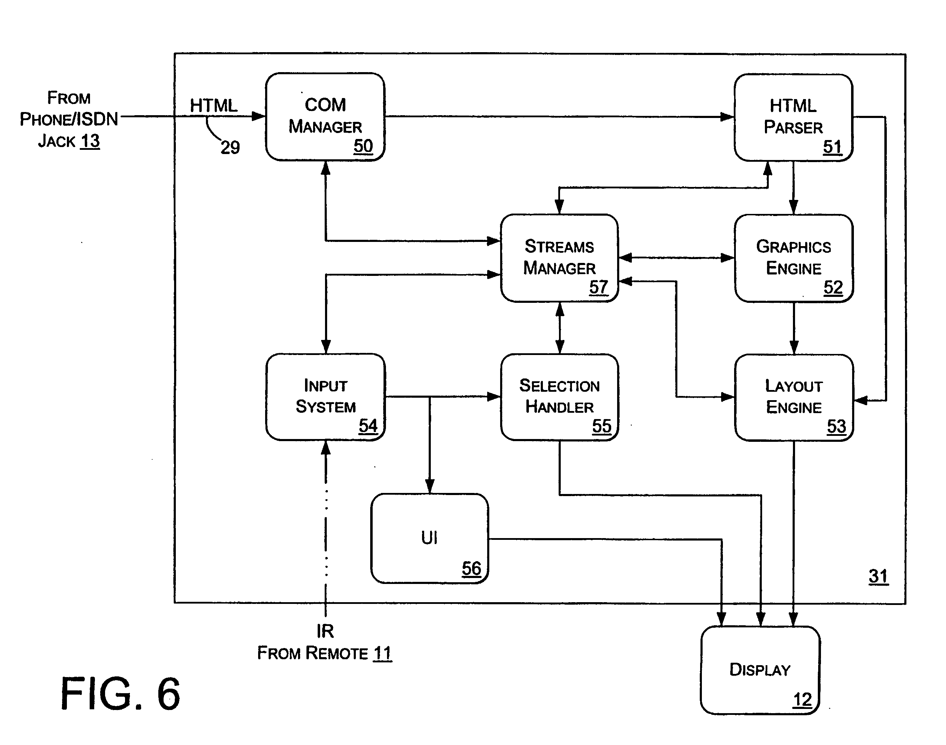

The Web browser functions of the present invention are implemented by application software 31. Fig. 6 illustrates the functional relationships between the various components of application software 31. Application software 31 includes a communications manager 50, an HTML (Hypertext Mark-up Language) parser 51, a graphics engine 52, a layout engine 53, an input system 54, a user interface 56, a selection handler 55, and a streams manager 57. The client system receives Web pages over network connection 29 in the form of HTML documents. Streams manager 57 controls and coordinates movement of data throughout the system.

Each HTML document is initially input to communications manager 50. Communications manager 50 performs functions to receive an HTML document over the network connection 29 including handling high-level communications protocols, such as HTTP (Hypertext Transport Protocol), TCP/IP (Transmission Control Protocol/Internet Protocol), etc. The communications manager 50 provides a received HTML document to the HTML parser 51, which then converts the HTML document descriptions to a displayable format for the client system.

An HTML document may contain text and/or refer to images, and may also include one or more hypertext links that are displayable objects that provide access to another Web page. Image information, such as JPEG or GIF image information, are provided by HTML parser 51 to layout engine 53 via a graphics engine 52, which is responsible for measuring and drawing images.

In the course of browsing through a displayed Web page or between different Web pages, a user activates buttons on remote control 11, which, in response, transmits IR signals that are received by the set-top box 10. Input system 54 records these inputs and provides them to selection handler 55 and user interface 56. In addition, input system 54 can handle input queuing and processing of inputs from various other input devices, such as a standard or IR keyboard. Other aspects of the Web browser which are visible to the user are provided by user interface 56 based on signals received from input system 54.

### Television Program Control

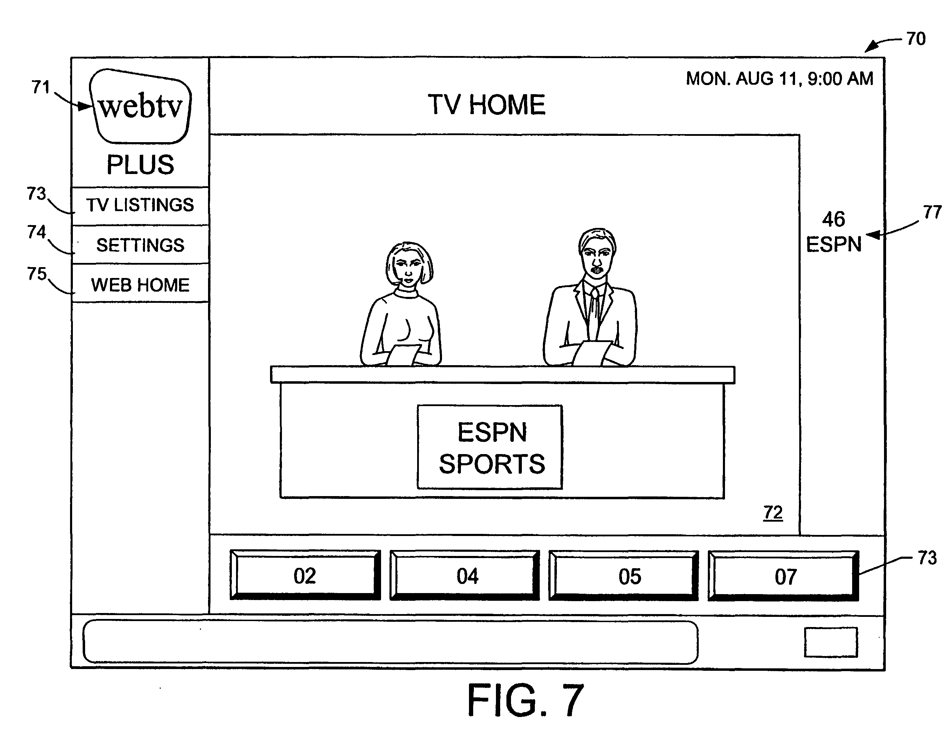

Fig. 7 shows a Television Home page 70 of the Internet network service. The TV Home page may be accessed and displayed by depressing the "Home" button 35 on the remote control 11 or by accessing the appropriate hypertext link on another Web page.

The TV Home page 70 includes the logo 71 (e.g., WebTV Plus), a television display screen 72, and hypertext links 73-75. Hypertext link 73 is a link to the TV Listings page for the system. The TV Listings page provides a list of television programs available to be viewed at a particular time and on a particular station. Hypertext link 74 is a link to the Settings page for the system, which provides several options and controls that allow the user to control parameters related to the display of television programs and web pages on the television display. Hypertext link 75 is a link to the system Home page, which provides the main interface through which the various programs can be accessed.

Television programs broadcast through the system are displayed in display screen 72. The channel number and station call identifier for the channel being received is displayed in display field 77. A user accesses television channels in the system similarly to the manner in which television channels are accessed on a normal television set. Channel up/down buttons 39 on remote control 11 allow a user to change channels up or down. Favorite or frequently viewed stations can be programmed into the system, and channel numbers corresponding to these stations may be displayed in display field 73 for convenient selection by the user.

According to an aspect of this invention, a recent channel screen is available to present channels that were recently viewed by the user. The recent channel screen allows a user to access a recently reviewed channel without requiring the user to remember the channel number and re-select the channel through channel adjustment buttons. The recent channel screen is accessed by pressing the Recent button 37 on remote control 11 while in the TV Home page 70.

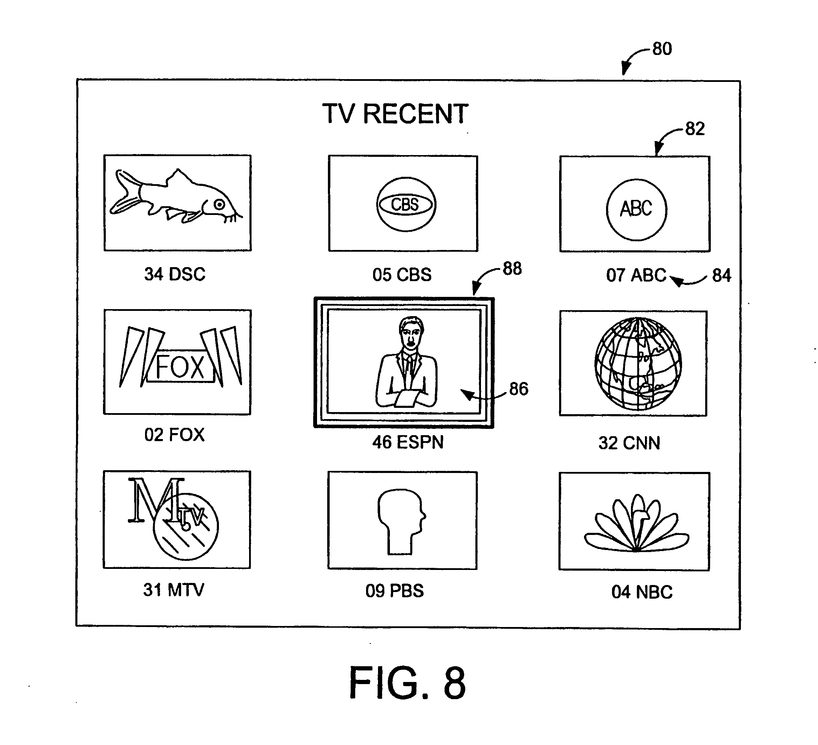

Fig. 8 shows one exemplary layout of the recent channel screen, which is referred to as the "TV Recent" screen 80. The TV Recent screen 80 includes a number of small display screens, such as display screen 82. There are nine small display screens 82 arrayed in a 3 x 3 arrangement in this layout. However, many other layouts are possible, with more or less small display screens and different arrangements.

Below each small display screen is the channel number and network call letters of the channel being displayed in the corresponding small display screen. A focus 88 indicates a presently selected one of the small display screens. In this example, the focus is implemented as a highlight box surrounding the small display screen. The small screen that is currently focused is referred to as the "active" or "currently viewed" screen 86. In other implementations, the focus may be a pointer, or a slight enlargement of the active screen, or other techniques for making one of the small screens stand out in comparison to the other small screens.

The active display screen 86 contains a live broadcast picture. In Fig. 8, the small display screen 86 corresponding to channel 46 contains a live picture. The other small display screens contain still images corresponding to the last image captured before the channel was de-selected.

Using the direction control buttons 15-18 on remote control unit 11, the user can move the highlight box 88 from one small display screen to another. As the highlight box 88 surrounds a particular display screen, that display screen becomes active, and the previously highlighted screen becomes de-selected and shows the last image captured on that channel. Once a small screen becomes active 86, the user can change the channels displayed within the active small screen using the channel up/down buttons 39 on the remote control 11.

According to another aspect, the user can display the currently highlighted channel as a full-screen image. The user selects the Enter (or Go) button 19 on remote control 11, which causes the television screen for the currently selected channel to be displayed in display area 72 in the TV Home page 70 (Fig. 7).

In an alternate implementation, the non-current display screens contain live pictures or still pictures which are occasionally updated to reflect current content. This alternative embodiment requires two television decoders, such as the television decoder 33 in the STB 10. One television decoder provides the live picture for the current channel, and the other television decoder provides the picture signal for the other channel display screens. A scanning system automatically scans and grabs signals for each of the channels in the TV Recent display screen. Depending on the scan rate of the scanning system the other channel display screens could be updated continuously, so that they each appear to display a live signal; or they could be updated semi-continuously so that their still images are periodically updated. This allows a user to see updated content for the other channels which is more recent than when the channel was originally de-selected, without disrupting television reception on the active channel.

According to another aspect, the user can cause all of the small display screens to be updated using the single television decoder. When in the TV Recent page 80, the user can press the "Recent" button 37 on the remote control 11 a second time to update the still images on all of the small display screens. Depressing the "Recent" button 37 causes the STB 10 to scan all channels listed in the recent channel list and to capture a more recent image of the de-selected or inactive channels. This update causes a brief disruption in the video signal presented in the active display screen, but this is not considered unpleasant to the viewer since the viewer initiated the update.

The TV Recent screen 80 comprises images for television stations that are stored in a chronological database, referred to as the "recent channel list." The recent channel list stores a preset number of channels in the order in which they were most recently viewed by a user. In the example illustrated in Fig. 8, small display screens are provided for nine of the most recently viewed channels. These are stored in a recent channel list with nine entries corresponding to the current channel, and the most recently accessed eight channels. It will be appreciated, however, that any number of channels can be stored and displayed depending on the size of the display device and small display screens, and the available memory in the processing system.

A channel can be added to the recent channel list in one of several different ways. Directly accessing a channel by entering numbers on the television set or through a remote control unit will cause the channel to be added to the recent channel list. A second way of adding a channel to the recent channel list is by accessing a channel through the channel up/down buttons 39 on remote control 11 and then viewing or resting on that channel for a certain minimum amount of time (e.g., 20 seconds). A third way of adding a channel to the recent channel list is manipulating the channel in the active (i.e., focused) small screen. Once the user selects one of the small screens in the TV Recent page 80, the user can change the channel using the channel up/down buttons 39. The newly selected channel is added to the recent channel list without the user having to view or rest on that channel for the time minimum.

Since the user can change the channel being displayed in the currently active small screen, the user is free to set several of the small screens in the TV Recent page 80 to the same channel. For instance, in Fig. 8, the user could change the active screen 86 to the same channel shown in a neighboring inactive screen, such as "32 CNN".

### TV Recent Screen Authoring

The TV Home page and TV Recent page are created using standard HTML command structures. Various different page formats and sequences may be utilized to achieve the present invention. Each small display screen (e.g., display screen 82) displayed in the TV Recent screen 80 is defined as an HTML extension tag, referred to as a "TV tag". HTML tags have attributes that describe how a particular HTML object will behave. The TV tag attributes describe how an object will be displayed on the television screen.

According to an aspect of this invention, the TV tag includes several attributes used by a TV object defined within the system. One attribute specifies the television channel corresponding to an object defining a small display screen object. Other TV Tag attributes specify the width and height of the display screen. Additional attributes can be used to specify other parameters, such as the shape and rotation of the small display screen object, among other characteristics.

The TV object can be defined as either active or inactive. If the TV object is active, a live broadcast video signal and audio signal are displayed in the corresponding small display screen. If the TV object is inactive, a still or semi-continuous (periodically updated) image is displayed in the small display screen. Another TV tag attribute, referred to as the alternate_frame_to_display attribute, specifies whether live video signal is to be shown in the small display screen object, or whether an alternate frame is to be displayed. As stated above, the alternate frame may be a still image corresponding to the last image grabbed when the corresponding channel was de-selected.

Another object, referred to as the TV Recent object, uses the TV tags to generate the TV Recent screen 80. When the user selects the "Recent" button 37 on remote control 11, the TV Recent object generates an HTML page with the TV tags and corresponding channel numbers. The number of TV tags created corresponds to the number of channel entries stored in the channel recent list and the number of small display screens displayed on the TV Recent screen 80. In the example illustrated in Fig. 8, the nine small display screens correspond to nine TV tags, each displayed with their respective channel number and network call letters.

The highlight box 88 of the TV Recent display screen 80 is implemented as an object, such as a Javascript object or an object defined in C++ or other similar high-level language. The highlight object specifies a small display screen object as active when the highlight box 88 is moved over the corresponding small display screen (e.g., display screen 86). Conversely, moving the highlight box off of a display screen, causes the small display screen to become inactive, thereby causing the small display screen to display an alternate image (e.g., a still image).

### Recent Channel Display Operation

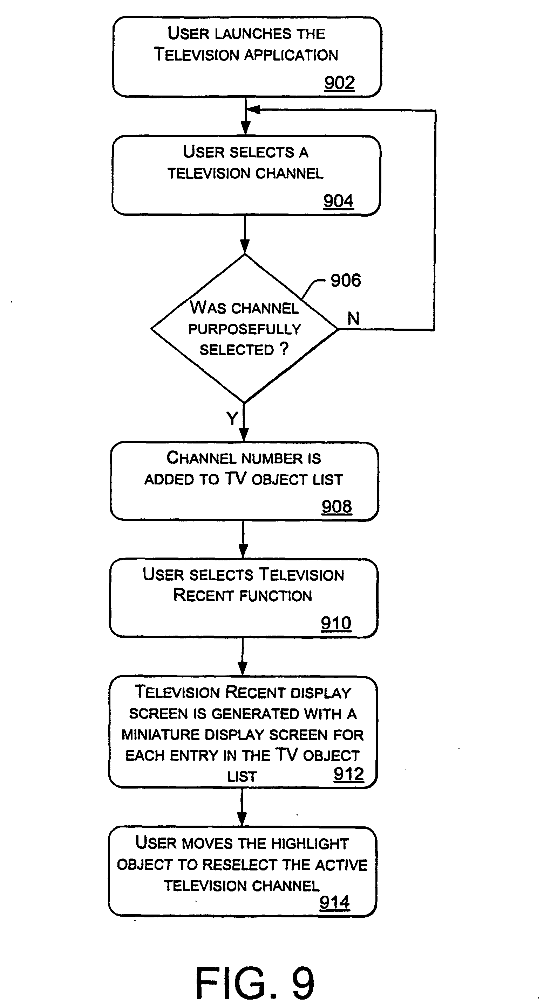

Fig. 9 is a flowchart showing steps in a method for displaying recently viewed television channels. In step 902, the user launches the television application in the client system. This is typically accomplished by selecting the appropriate option button or HTML link in the Home page. Upon selecting the television application, the TV Home page 70 is displayed on the television monitor. The user may then select a television channel to viewed (step 904). The television channel is typically selected using the television channel adjustment buttons 39 on remote control 11.

While watching television, a user may casually flip through channels sequentially or purposefully select a particular channel that he wishes to view. In step 906, it is determined whether a particular channel was purposefully selected as opposed to merely being selected for only a short period of time. A channel is assumed to be purposefully selected if it was directly input, viewed for more than a predetermined period of time (e.g., 20 seconds), or if it was selected in the active small display screen in the TV Recent page 80.

If it is determined that the channel was purposefully selected (i.e., the "yes" branch from step 906), the channel number is added to the recent channel list for the TV object (step 908). In one implementation, the recent channel list is a data structure within the TV object that stores the selected television channels in the order they were accessed. A predetermined number of channels (e.g., 9 channels) is stored in the recent channel list.

To view recently selected television channels, the user may select the television recent function by the depressing "Recent" button 37 on the remote control 11 (step 910). Upon selecting the television recent function, the TV Recent display screen 80 is generated (step 912). The TV Recent display screen 80 contains small display screens for each entry in the recent channel list. The display screen for the currently viewed channel displayed a live video image while the display screens for the other recently selected channels display still images. A highlight box surrounds the currently viewed channel. The highlight box can be moved among the small display screens change the active television channel (step 914). The user may then select the enter button 19 on the remote control 11 to display the selected television channel as a full screen on the TV Home page 70.

Once in the TV Recent page 80, the user can press the "Recent" button 37 on the remote control 11 a second time to update the still images on all of the small display screens. Depressing the "Recent" button 37 causes the STB 10 to scan all channels listed in the recent channel list and to capture a more recent image of the channels. This update causes a brief disruption in the video signal presented in the active display screen, but this is not considered unpleasant to the viewer since the viewer initiated the update.

Although the invention has been described in language specific to structural features and/or methodological steps, it is to be understood that the invention defined in the appended claims is not necessarily limited to the specific features or steps described. Rather, the specific features and steps are disclosed as preferred forms of implementing the claimed invention.

## Claims

1. A method of displaying a number of most recently-accessed television channels, the method comprising the following steps:
determining whether a television channel has been recently selected by a user;
adding the television channel to a chronological list of selected channels if the television channel was determined to be one of the number of most recently selected channels;
generating a primary display screen having multiple small display screens, each small display screen corresponding to one of the selected channels; and
displaying the primary display screen on a television through a web browser program.

2. A method as claimed in claim 1, wherein the determining step comprises the step of monitoring whether the user selects a television channel according to a predetermined method.

3. A method as claimed in claim 2, wherein the predetermined method comprises selecting the television channel for a predetermined length of time.

4. A method as claimed in claim 2, wherein the predetermined method comprises selecting the television channel from within one of the small display screens.

5. A method as claimed in claim 2, wherein the predetermined method comprises entering an identifier corresponding to the television channel directly into a device controlling a television tuner.

6. A method as claimed in any one of claims 1 to 5, wherein one of the small display screens is active and corresponds to a currently-selected television channel, the active small display screen being differentiated from the remaining small display screens.

7. A method as claimed in claim 6, further comprising the step of enlarging the active small display screen to full-screen mode, and removing the remaining small display screens.

8. A method as claimed in claim 6, further comprising the step of applying a focus to the active small display screen.

9. A method as claimed in claim 6, further comprising the following steps:
generating a highlight box to enclose the active small display screen; and
moving the highlight box from the active small display screen to a second small display screen to render active the second small display screen and to de-select the active small display screen.

10. A method as claimed in any one of claims 6 to 9, wherein the generating step comprises the step of depressing an option button on a control unit to initiate generation of the primary display screen.

11. A method as claimed in any one of claims 6 to 10, further comprising the step of ordering the selected channels within the list in an order in which the selected channels were selected.

12. A method as claimed in any one of claims 6 to 11, further comprising the following steps:
displaying a live television signal from the television channel in the active small display screen;
changing to a second television channel within the active small display screen; and
displaying a live television broadcast signal from the second television channel in the active small display screen.

13. A method as claimed in any one of claims 6 to 12, further comprising the following steps;
displaying a live television broadcast signal from the television channel in the active small display screen; and
displaying a still image of a corresponding channel in the remaining small display screens.

14. A method as claimed in claim 13, wherein the still image represents a last image captured on the corresponding channel when the channel was de-selected.

15. A method as claimed in claim 13 or claim 14, further comprising the step of periodically updating the still image.

16. A method as claimed in any one of claims 1 to 15, further comprising the step of displaying still images captured from corresponding channels in at least one of the small display screens.

17. A method as claimed in claim 16, further comprising the step of occasionally updating the still images in the small display screens.

18. A method as claimed in claim 16 or claim 17, further comprising the step of updating the still images in the small display screens in response to activation of a button on a remote control unit.

19. A method as claimed in claim 1, further comprising the step of applying a focus to one of the small display screens to designate the one small display screen as active and containing a currently-selected television channel and to differentiate the active small display screen from remaining ones of the small display screens.

20. A method as claimed in claim 19, further comprising the step of enlarging the active small display screen to full-screen mode and removing the remaining small display screens.

21. A method as claimed in claim 19 or claim 20, further comprising the step of moving the focus from the active small display screen to a second small display screen to render active the second small display screen and to de-select the active small display screen.

22. A method as claimed in any one of claims 19 to 21, further comprising the following steps:
displaying a live television broadcast signal from the television channel in the active small display screen; and
displaying still images of corresponding channels in the remaining small display screens.

23. A method as claimed in claim 22, further comprising the step of occasionally updating the still images in the small display screens.

24. A method as claimed in claim 23, further comprising the step of updating the still images in the small display screens in response to activation of a button on a remote control unit.

25. A method as claimed in claim 1, further comprising the step of displaying still images captured from corresponding channels in the small display screens.

26. A method as claimed in claim 25, further comprising the step of updating the still images in the small display screens.

27. A method as claimed in claim 25 or claim 26, further comprising the step of displaying a live television broadcast signal in at least one of the small display screens.

28. A client system capable of receiving multiple television channels, the system comprising:
a processor; and
a memory coupled to the processor, the memory having stored therein executable instructions which, when executed by the processor, cause the processor to perform the following steps:
means for determining whether a television channel is one of a number of channels most recently selected by a user;
means for adding the television channel to a chronological list of selected channels if the television channel was determined to be one of the number of channels most recently selected;
means for generating a primary display screen having multiple small display screens, each small display screen corresponding to one of the selected channels; and
means for displaying the primary display screen or a television through a web browser program.

29. A client system as claimed in claim 28, wherein the primary display screen comprises a screen image displayed through an interactive display environment including World Wide Web content.

30. A client system as claimed in claim 28 or claim 29, wherein the primary display screen is a Hypertext Mark-up Language (HTML) object.

31. An Internet system, comprising:
at least one server system;
one or more of the client systems as recited in any one of claims 28 to 30; and
a wide area network (WAN) interconnecting the server system and the one or more client systems.

32. A computer-readable medium having stored thereon computer-executable instructions for performing the following steps:
determining whether a television channel is one of a number of channels most recently selected by a user;
adding the television channel to a chronological list of selected channels if the television channel was determined to be one of the number of channels most recently selected;
generating a primary display screen having multiple small display screens, each small display screen corresponding to one of the selected channels; and
displaying the primary display screen on a television through a web browser program.

33. A computer-readable medium as claimed in claim 32, further having computer-executable instructions for performing the following additional step:
applying a focus to an active small display screen to designate the active small display screen as containing a currently-selected television channel and to differentiate the active small display screen from remaining ones of the small display screens.

34. A computer-readable medium as claimed in claim 32 or claim 33, further having computer-executable instructions for performing the following additional step:
displaying still images captured from corresponding channels in the small display screens.

## Patentansprüche

1. Verfahren zum Darstellen einer Anzahl von kürzlich aufgerufenen Femsehkanälen, wobei das Verfahren die folgenden Schritte umfasst:
Besämmen, ob ein Fernsehkanal durch einen Nutzer vor kurzem ausgewählt worden ist,
Hinzufügen des Fernsehkanals zu einer chronologischen Liste von ausgewählten Kanälen, falls der Fernsenkanal als einer aus der Anzahl der kürzlich ausgewählten Kanäle bestimmt wurde,
Erzeugen einer primären Bildanzeige mit mehreren kleinen Bildanzeigen, wobei jede kleine Bildanzeige einem der ausgewählten Kanäle entspricht und
Darstellen der primären Bildanzeige auf einem Fernseher durch ein Web-Browser-Programm.

2. Verfahren nach Anspruch 1, worin der Schritt des Bestimmens den Schritt des Überwachens umfasst, ob der Nutzer einen Fernsehkanal gemäß einem vorgegebenen Verfahren auswählt.

3. Verfahren nach Anspruch 2, worin das vorgegebene Verfahren das Auswählen des Fernsehkanals für eine vorgegebene Zeitspanne umfasst.

4. Verfahren nach Anspruch 2, worin das vorgegebene Verfahren das Auswählen des Fernsehkanals aus einer der kleinen Bildanzeigen umfasst.

5. Verfahren nach Anspruch 2, worin das vorgegebene Verfahren das Eingeben einer dem Fernsehkanal entsprechenden Kennung direkt in ein Gerät zum Kontrollieren des Fernsehempfängers umfasst.

6. Verfahren nach einem der Ansprüche 1 bis 5, worin eine der kleinen Bildanzeigen aktiv ist und einem aktuell ausgewählten Fernsehkanal entspricht, wobei die aktive kleine Bildanzeige sich von den verbleibenden kleinen Bildanzeigen unterscheidet.

7. Verfahren nach Anspruch 6, das zusätzlich den Schritt des Vergrößerns der aktiven kleinen Bildanzeige zu einem Vollbildmodus und das Entfernen der verbleibenden kleinen Bildanzeigen umfasst.

8. Verfahren nach Anspruch 6, das zusätzlich den Schritt des Anwendens eines Fokus auf die aktive kleine Bildanzeige umfasst.

9. Verfahren nach Anspruch 6, das zusätzlich die folgenden Schritte umfasst:
Erzeugen eines Kastens zum Hervorheben, der die aktive kleine Bildanzeige umschüeßt und
Bewegen des Kastens zum Hervorheben von einer aktiven kleinen Bildanzeige zu einer zweiten aktiven kleinen Bildanzeige zum Aktivmachen der zweiten kleinen Bildanzeige und zum Deselektieren der aktiven kleinen Bildanzeige.

10. Verfahren nach einem der Ansprüche 6 bis 9, worin der Schritt des Erzeugens den Schritt des Niederdrückens einer Optionstaste auf einer Kontrolleinheit zum Einleiten der Erzeugung der primären Bildanzeige umfasst.

11. Verfahren nach einem der Ansprüche 6 bis 10, das zusätzlich den Schritt des Anordnens der ausgewählten Kanäle in der Liste in einer Reihenfolge umfasst, in der die ausgewählten Kanäle ausgewählt, wurden.

12. Verfahren nach einem der Ansprüche 6 bis 11, das zusätzlich die folgenden Schritte umfasst:
Darstellen eines direkten Fernsehsignals aus dem Fernsehkanal in der aktiven kleinen Bildanzeige,
Wechseln zu einem zweiten Fernsehkanal in der aktiven kleinen Bildanzeige und
Darstellen eines direkten Fernsehsendungssignals aus dem zweiten Fernsehkanal in der aktiven kleinen Bildanzeige.

13. Verfahren nach einem der Ansprüche 6 bis 12, das zusätzlich die folgenden Schritte umfasst:
Darstellen eines direkten Fernsehsendungssignals aus dem Fernsehkanal in der aktiven kleinen Büdanzeige und
Darstellen eines stehenden Bildes eines entsprechenden Kanals in den verbleibenden kleinen Bildanzeigen.

14. Verfahren nach Anspruch 13, worin die stehenden Bilder ein letztes Bild repräsentieren, das auf dem entsprechenden Kanal beim Deselektieren des Kanals eingefangen wurde.

15. Verfahren nach Anspruch 13 oder 14, das zusätzlich den Schritt des periodischen Aktualisierens des stehenden Bildes umfasst.

16. Verfahren nach einem der Ansprüche 1 bis 15, das zusätzlich den Schritt des Darstellens der stehenden Bilder umfasst, die von den entsprechenden Kanälen in mindestens einer der kleinen Bildanzeigen eingefangen wurde.

17. Verfahren nach Anspruch 16, das zusätzlich den Schritt des gelegentlichen Aktualisierens der stehenden Bilder in den kleinen Bildanzeigen umfasst.

18. Verfahren nach Anspruch 16 oder 17, das zusätzlich den Schritt des Aktualisierens der stehenden Bilder in den kleinen Bildanzeigen als Reaktion auf die Betätigung einer Taste auf einer Fernbedienungseinheit umfasst.

19. Verfahren nach Anspruch 1, das zusätzlich den Schritt des Anwendens eines Fokus auf eine der kleinen Bildanzeigen zum Kennzeichnen der einen kleinen Bildanzeige als aktiv und als einen aktuell ausgewählten Fernsehkanal enthaltend und zum Unterscheiden der aktiven kleinen Bildanzeige von den verbleibenden kleinen Bildanzeigen.

20. Verfahren nach Anspruch 19, das zusätzlich den Schritt des Vergrößerns der aktiven kleinen Bildanzeige zum Vollbildmodus und das Entfernen der verbleibenden kleinen Bildanzeigen umfasst.

21. Verfahren nach Anspruch 19, oder 20, das zusätzlich den Schritt des Bewegens des Fokus von der aktiven kleinen Bildanzeige zu einer zweiten kleinen Bildanzeige zum Aktivmachen der zweiten kleinen Bildanzeige und zum Deselektieren der aktiven kleinen Bildanzeige umfasst.

22. Verfahren nach einem der Ansprüche 19 bis 21, das zusätzlich die folgenden Schritte umfasst:
Darstellen eines direkten Fernsehsendungssignals aus dem Fernsehkanal in der aktiven kleinen Bildanzeige und
Darstellen stehender Bilder der entsprechenden Kanäle in den verbleibenden kleinen Bildanzeigen.

23. Verfahren nach Anspruch 22, das zusätzlich den Schritt des gelegentlichen Aktualisierens der stehenden Bilder in den kleinen Bildanzeigen umfasst.

24. Verfahren nach Anspruch 23, das zusätzlich den Schritt des Aktualisierens der stehenden Bilder in den kleinen Bildanzeigen als Reaktion auf die Betätigung einer Taste auf einer Fernbedienungseinheit umfasst.

25. Verfahren nach Anspruch 1, das zusätzlich den Schritt des Darstellens stehender Bilder umfasst, die von den entsprechenden Kanälen in den kleinen Bildanzeigen eingefangen wurden.

26. Verfahren nach Anspruch 25, das zusätzlich den Schritt des Aktualisierens der stehenden Bilder in den kleinen Bildanzeigen umfasst.

27. Verfahren nach Anspruch 25 oder 26, das zusätzlich den Schritt des Darstellens eines direkten Fernsehsendungssignals in mindestens einem der kleinen Bildanzeigen umfasst.

28. Client-System, das zum Empfangen von mehreren Fernsehkanälen in der Lage ist, wobei das System umfasst:
Einen Prozessor und
einen mit dem Prozessor verbundenen Speicher, wobei der Speicher darin gespeicherte ausführbare Anweisungen umfasst, die bei Ausführung durch den Prozessor den Prozessor zur Durchführung der folgenden Schritte bewirken:
Mittel zum Bestimmen, ob ein Fernsehkanal einer aus einer Anzahl von kürzlich durch einen Nutzer ausgewählten Kanälen ist,
Mittel zum Hinzufügen des Fernsehkanals zu einer chronologischen Liste der ausgewählten Kanäle, falls der Fernsehkanal als einer aus der Anzahl der kürzlich ausgewählten Kanäle bestimmt wurde,
Mittel zum Generieren einer primären Bildanzeige mit mehreren kleinen Bildanzeigen, wobei jede kleine Bildanzeige einem der ausgewählten Kanäle entspricht, und
Mittel zum Darstellen der primären Bildanzeige auf einem Fernseher durch ein Web-Browser-Programm.

29. Client-System nach Anspruch 28, worin die primäre Bildanzeige ein Anzeigenbild umfasst, das durch eine interaktive Anzeigeumgebung inklusive World-Wide-Web-Inhalt dargestellt wird.

30. Client-System nach Anspruch 28, oder 29, worin die primäre Bildanzeige ein HTML (Hypertext Mark-up Language)-Objekt aufweist.

31. Internetsystem umfassend:
mindestens ein Server-System,
ein oder mehrere der Client-Systeme nach einem der Ansprüche 28 bis 30 und
ein WAN (Wide Area Network), das das Serversystem und den einen oder die mehreren der Client-Systeme untereinander verbindet.

32. Computerlesbares Medium, das computerausführbare Anweisungen zum Durchführen der folgenden Schritte darauf gespeichert hat:
Bestimmen, ob ein Fernsehkanal einer aus einer Anzahl von kürzlich durch einen Nutzer ausgewählten Kanälen ist,
Hinzufügen des Fernsehkanals zu einer chronologischen Liste von ausgewählten Kanälen, falls der Fernsehkanal als einer aus der Anzahl von kürzlich ausgewählten Kanälen bestimmt wurde,
Erzeugen einer primären Bildanzeige mit mehreren kleinen Bildanzeigen, wobei jede kleine Bildanzeige einem der ausgewählten Kanäle entspricht, und
Anzeigen der primären Bildanzeige auf einem Fernseher über ein Web-Browser-Programm.

33. Computerlesbares Medium nach Anspruch 32, das zusätzlich computerausführbare Anweisungen zum Durchführen des folgenden zusätzlichen Schritts aufweist:
Anwenden eines Fokus auf eine aktive kleine Bildanzeige zum Kennzeichnen der aktiven kleinen Bildanzeige als einen vor kurzem ausgewählten Fernsehkanal enthaltend und zum Unterscheiden der aktiven kleinen Bildanzeige von den verbleibenden kleinen Bildanzeigen.

34. Computerlesbares Medium nach Anspruch 32 oder 33, das zusätzlich computerausführbare Anweisungen zum Durchführen des folgenden zusätzlichen Schritts aufweist:
Darstellen stehender Bilder, die von entsprechenden Kanälen in den kleinen. Bildanzeigen eingefangen wurde.

## Revendications

1. Procédé d'affichage d'un certain nombre de chaînes de télévision récemment regardées, le procédé comprenant les étapes suivantes consistant à :
déterminer si une chaîne de télévision a été récemment sélectionnée par un utilisateur ;
ajouter la chaîne de télévision à une liste chronologique de chaînes sélectionnées si la chaîne de télévision a été déterminée comme étant une du nombre des chaînes les plus récemment sélectionnées ;
générer un écran d'affichage primaire ayant plusieurs petits écrans d'affichage, chaque petit écran d'affichage correspondant à une des chaîne sélectionnées ; et
afficher l'écran d'affichage primaire sur une télévision par l'intermédiaire d'un programme de navigation web.

2. Procédé tel que revendiqué dans la revendication 1, dans lequel l'étape de détermination comprend l'étape consistant à surveiller si l'utilisateur sélectionne une chaîne de télévision selon un procédé prédéterminé.

3. Procédé tel que revendiqué dans la revendication 2, dans lequel le procédé prédéterminé comprend de sélectionner la chaîne de télévision pendant une durée prédéterminée.

4. Procédé tel que revendiqué dans la revendication 2, dans lequel le procédé prédéterminé comprend de sélectionner la chaîne de télévision parmi un des petits écrans d'affichage.

5. Procédé tel que revendiqué dans la revendication 2, dans lequel le procédé prédéterminé comprend d'entrer un identificateur correspondant à la chaîne de télévision directement dans un dispositif contrôlant un tuner de télévision.

6. Procédé tel que revendiqué dans l'une quelconque des revendications 1 à 5, dans lequel un des petits écrans d'affichage est actif et correspond à une chaîne de télévision actuellement sélectionnée, le petit écran d'affichage actif étant différencié des petits écrans d'affichage restants.

7. Procédé tel que revendiqué dans la revendication 6, comprenant en outre l'étape consistant à agrandir le petit écran d'affichage actif en mode plein écran et à supprimer les petits écrans d'affichage restants.

8. Procédé tel que revendiqué dans la revendication 6, comprenant en outre l'étape consistant à appliquer une focalisation sur le petit écran d'affichage actif.

9. Procédé tel que revendiqué dans la revendication 6, comprenant en outre les étapes suivantes consistant à :
générer un cadre de surbrillance pour enclore le petit écran d'affichage actif; et
déplacer le cadre de surbrillance depuis le petit écran d'affichage actif vers un second petit écran d'affichage actif afin de rendre actif le second petit écran d'affichage et de désélectionner le petit écran d'affichage actif.

10. Procédé tel que revendiqué dans l'une quelconque des revendications 6 à 9, dans lequel l'étape de génération comprend l'étape consistant à appuyer sur un bouton d'option sur une unité de commande pour lancer la génération de l'écran d'affichage primaire.

11. Procédé tel que revendiqué dans l'une quelconque des revendications 6 à 10, comprenant en outre l'étape consistant à classer les chaînes sélectionnées à l'intérieur de la liste dans l'ordre suivant lequel les chaînes sélectionnées ont été sélectionnées.

12. Procédé tel que revendiqué dans l'une quelconque des revendications 6 à 11, comprenant en outre les étapes suivantes consistant à :
afficher un signal de télévision en direct à partir de la chaîne de télévision dans le petit écran d'affichage actif;
changer vers une seconde chaîne de télévision à l'intérieur du petit écran d'affichage actif; et
afficher un signal de diffusion de télévision en direct à partir de la seconde chaîne de télévision dans le petit écran d'affichage actif.

13. Procédé tel que revendiqué dans l'une quelconque des revendications 6 à 12, comprenant en outre les étapes suivantes consistant à :
afficher un signal de diffusion de télévision en direct à partir de la chaîne de télévision dans le petit écran d'affichage actif ; et
afficher une image fixe d'une chaîne correspondante dans les petits écrans d'affichage restants.

14. Procédé tel que revendiqué dans la revendication 13, dans lequel l'image fixe représente une dernière image capturée sur la chaîne correspondante lorsque la chaîne a été désélectionnée.

15. Procédé tel que revendiqué dans la revendication 13 ou la revendication 14, comprenant en outre l'étape consistant à mettre à jour périodiquement l'image fixe.

16. Procédé tel que revendiqué dans l'une quelconque des revendications 1 à 15, comprenant en outre l'étape consistant à afficher des images fixes capturées à partir des chaînes correspondantes dans au moins un des petits écrans d'affichage.

17. Procédé tel que revendiqué dans la revendication 16, comprenant en outre l'étape consistant à mettre à jour occasionnellement les images fixes dans les petits écrans d'affichage.

18. Procédé tel que revendiqué dans la revendication 16 ou dans la revendication 17, comprenant en outre l'étape consistant à mettre à jour les images fixes dans les petits écrans d'affichage en réponse à l'activation d'un bouton sur une télécommande.

19. Procédé tel que revendiqué dans la revendication 1, comprenant en outre l'étape consistant à appliquer une focalisation sur un des petits écrans d'affichage pour désigner le petit écran d'affichage comme étant actif et contenant une chaîne de télévision actuellement sélectionnée et pour différentier le petit écran d'affichage actif des petits écrans d'affichage restants.

20. Procédé tel que revendiqué dans la revendication 19, comprenant en outre l'étape consistant à agrandir le petit écran d'affichage actif en mode plein écran et à supprimer les petits écrans d'affichage restants.

21. Procédé tel que revendiqué dans la revendication 19 ou la revendication 20, comprenant en outre l'étape consistant à déplacer la focalisation depuis le petit écran d'affichage actif vers un second petit écran d'affichage pour rendre actif le second petit écran d'affichage et à désélectionner le petit écran d'affichage actif

22. Procédé tel que revendiqué dans l'une quelconque des revendications 19 à 21, comprenant en outre les étapes suivantes consistant à :
afficher un signal de diffusion de télévision en direct à partir de la chaîne de télévision dans le petit écran d'affichage actif; et
afficher des images fixes de chaînes correspondantes dans les petits écrans d'affichage restants.

23. Procédé tel que revendiqué dans la revendication 22, comprenant en outre l'étape consistant à mettre à jour occasionnellement les images fixes dans les petits écrans d'affichage.

24. Procédé tel que revendiqué dans la revendication 23, comprenant en outre l'étape consistant à mettre à jour les images fixes dans les petits écrans d'affichage en réponse à l'activation d'un bouton sur une télécommande.

25. Procédé tel que revendiqué dans la revendication 1, comprenant en outre l'étape consistant à afficher des images fixes capturées à partir des chaînes correspondantes dans les petits écrans d'affichage.

26. Procédé tel que revendiqué dans la revendication 25, comprenant en outre l'étape consistant à mettre à jour les images fixes dans les petits écrans d'affichage.

27. Procédé tel que revendiqué dans la revendication 25 ou la revendication 26, comprenant en outre l'étape consistant à afficher un signal de télévision en direct dans au moins un des petits écrans d'affichage.

28. Système client capable de recevoir plusieurs chaînes de télévision, le système comprenant :
un processeur ; et
une mémoire couplée au processeur, la mémoire stockant des instructions exécutables qui, lorsqu'elles sont exécutées par le processeur, entraînent que le processeur exécute les étapes suivantes :
un moyen pour déterminer si une chaîne de télévision est une chaîne du nombre des chaînes les plus récemment sélectionnées par un utilisateur ;
un moyen pour ajouter la chaîne de télévision à une liste chronologique de chaînes sélectionnées si la chaîne de télévision a été déterminée comme étant une du nombre des chaînes les plus récemment sélectionnées ;
un moyen pour générer un écran d'affichage primaire ayant plusieurs petits écrans d'affichage, chaque petit écran d'affichage correspondant à une des chaîne sélectionnées ; et
un moyen pour afficher l'écran d'affichage primaire sur une télévision par l'intermédiaire d'un programme de navigation web.

29. Système client tel que revendiqué dans la revendication 28, dans lequel l'écran d'affchage primaire comprend une image d'écran affichée par l'intermédiaire d'un environnement d'affchage interactif comprenant un contenu web.

30. Système client tel que revendiqué dans la revendication 28 ou la revendication 29, dans lequel l'écran d'affichage primaire est un objet HTML (Hypertext Mark-up Language).

31. Système Internet comprenant :
au moins un système serveur ;
un ou plusieurs des systèmes clients tels que décrits dans l'une quelconque des revendications 28 à 30 ; et
un réseau étendu (WAN) interconnectant le système serveur et un ou plusieurs des systèmes clients.

32. Support lisible par un ordinateur sur lequel sont stockées des instructions exécutables par un ordinateur pour exécuter les étapes suivantes :
déterminer si une chaîne de télévision est une chaîne du nombre des chaînes les plus récemment sélectionnées par un utilisateur ;
ajouter la chaîne de télévision à une liste chronologique de chaînes sélectionnées si la chaîne de télévision a été déterminée comme étant une du nombre des chaînes les plus récemment sélectionnées ;
générer un écran d'affichage primaire ayant plusieurs petits écrans d'affichage, chaque petit écran d'affichage correspondant à une des chaîne sélectionnées ; et
afficher l'écran d'affichage primaire sur une télévision par l'intermédiaire d'un programme de navigation web.

33. Support lisible par un ordinateur tel que revendiqué dans la revendication 32, contenant en outre des instructions exécutables par un ordinateur pour exécuter l'étape supplémentaire suivante consistant à :
appliquer une focalisation sur un petit écran d'affichage actif pour désigner le petit écran d'affichage actif comme contenant une chaîne de télévision actuellement sélectionnée et pour différentier le petit écran d'affichage actif des petits écrans d'affichage restants.

34. Support lisible par un ordinateur tel que revendiqué dans la revendication 32 ou la revendication 33, contenant en outre des instructions exécutables par un ordinateur pour exécuter l'étape supplémentaire suivante consistant à :
afficher des images fixes capturées à partir des chaînes correspondantes dans les petits écrans d'affichage.
